**Europäisches Patentamt**

**European Patent Office**

**Office européen des brevets**

(19)

(11) **EP 1 217 400 A1**

(12) **EUROPEAN PATENT APPLICATION**

(43) Date of publication:
    **26.06.2002 Bulletin 2002/26**

(51) Int Cl.7: **G02B 6/287**, G02B 6/255

(21) Application number: **00128290.4**

(22) Date of filing: **22.12.2000**

(84) Designated Contracting States:
    **AT BE CH CY DE DK ES FI FR GB GR IE IT LI LU MC NL PT SE TR**
    Designated Extension States:
    **AL LT LV MK RO SI**

(71) Applicant: **Corning O.T.I. S.p.A.**
    **20126 Milano (IT)**

(72) Inventors:
    • **Pianciola, Aurelio**
      **27045 Casteggio (Pavia) (IT)**

    • **De Donno, Marco**
      **73024 Maglie (LE) (IT)**

(74) Representative: **Giannesi, Pier Giovanni et al**
    **Pirelli S.p.A.**
    **Industrial Property Dept.**
    **Viale Sarca, 222**
    **20126 Milano (IT)**

(54) **Method for making splices between two optical fibres which are different from each other**

(57) Splice between a first optical fibre ($F_1$), having a first propagation constant, and a second optical fibre ($F_2$), having a second propagation constant which is different from the first. The said splice comprises a coupling region (G) between an end portion of the said first optical fibre and an end portion of the said second fibre, such that a coupling of at least 90% of the optical power in a waveband of at least 100 nm is obtained between the said first fibre and the said second fibre.

- **Fig. 2** -

**EP 1 217 400 A1**

**Description**

The present invention relates to a method for making a splice between two optical fibres which are different from each other. In particular, the present invention relates to the making of a fusion splice between two optical fibres which are different from each other, in such a way as to maximize the optical power transfer from one fibre to the other.

For the purposes of the present description, a splice between two optical fibres is defined as a fixed connection between the said two fibres which is able to provide optical continuity between them.

A known method for making the splice between two optical fibres is the fusion method.

US Patent 481,054 describes a method for making a fusion splice between two optical fibres, in which the two ends of the fibres to be joined together are free of their coating and are arranged facing each other. The optical axes of the two fibres are aligned, and the two ends are welded together by an electrical discharge.

US Patent 5,146,527 describes a method for making a fusion splice between two single mode optical fibres, in which the two ends of the fibres to be joined together are inserted into a ferrule, from opposite ends of the said ferrule, in such a way that the said ends face each other and in such a way that the optical axes of the two fibres are aligned with each other. The ends are then welded together by the application of thermal energy through an aperture formed in the central region of the said ferrule. The patent cites splices obtained with this method and having losses of less than 0.5 dB, and typically losses of 0.2 dB.

A machine used for the purpose of making a fusion splice between two fibres is a fusion splicer, for example the FSM-20RS II 8 machine produced by Fujikura. The operating principle comprises the following stages:

1. the ends of the two fibres to be welded are cut so that the cut is orthogonal to the optical axis;
2. the cut ends of the two fibres are aligned with each other;
3. the machine generates an arc discharge which brings the ends of the two fibres to the softening temperature;
4. the two ends of the fibres, now at the melting point, are pushed against each other by appropriate micro-movements: consequently, when the two fibres return to the ambient temperature, they will be welded together.

For the purposes of the present invention, the mode field radius (MFR), $\omega_F$, of an optical fibre is defined as the radial distance from the centre of the fibre at which the distribution of optical power travelling along the optical fibre is reduced by a factor $e^2$ with respect to the maximum value.

For the purposes of the present invention, two fibres are defined as being different from each other when they have two different mode field radii or if they have different propagation constants.

An example of a splice between two optical fibres of different types is the connection of a first length of fibre, for example a length of optical fibre of an optical telecommunications line, to a second length of fibre, different from the first, which forms the input and/or output of an in-fibre optical device. These optical devices can advantageously be formed by what are known as "all fibre" methods; the characteristic of these devices is that they are formed directly in an optical fibre. Erbium-doped fibres (used for optical amplification), fibres for compensating chromatic dispersion, and optical filters are examples of this type of in-fibre device. Each of the said optical devices is preferably formed on a specific fibre suitable for the operations of the device, in order to facilitate the processing of the fibres and thus produce a device with high performance.

A further example is the splicing of the optical fibres of two different optical devices.

In the examples cited above, it may be necessary to form a splice between two optical fibres which are different from each other. The theoretical losses of such a splice can be calculated from the known relation

$$I.L.[\%] = 100 \cdot \left[ 1 - \frac{4 \cdot \omega_{F1}^{2} \cdot \omega_{F2}^{2}}{\left( \omega_{F1}^{2} + \omega_{F2}^{2} \right)^{2}} \right] \qquad (1)$$

- where *I.L.* is the insertion loss, and
- $\omega_{F1}$ and $\omega_{F2}$ are the mode field radii (MFR) of the two fibres to be joined.

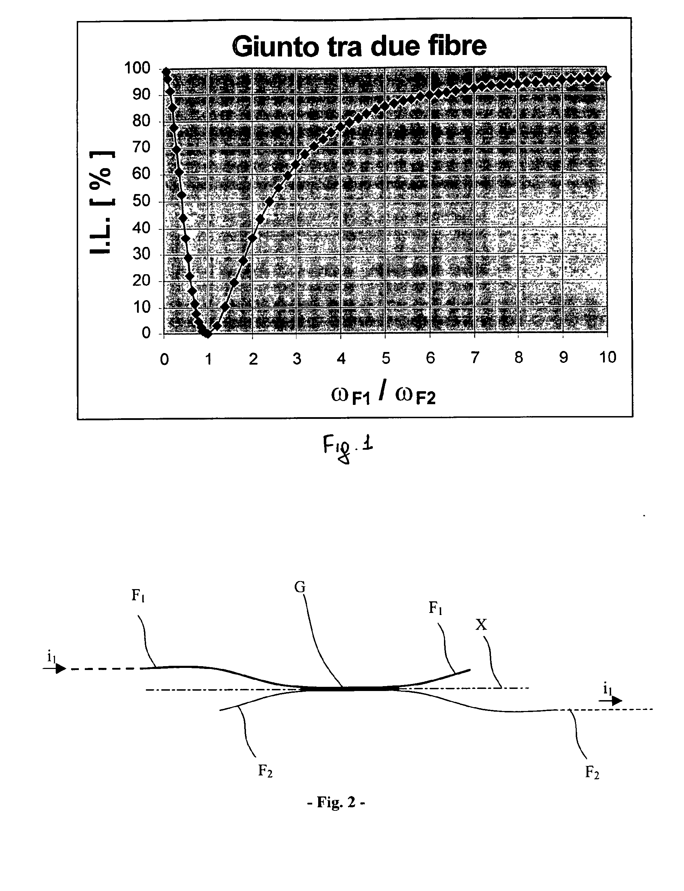

The variation of the theoretical losses of a splice between two fibres is indicated in Figure 1: the horizontal axis shows the ratio between the two MFR of the two fibres.

Equation (1) is valid provided that the welded fibres maintain their characteristics (core dimension and index step). This is because the losses are due to the discontinuity between the core dimensions and the values of the index step of the two joined fibres.

The applicant has observed that, if the optical fibres are significantly different from each other, in terms of the core dimensions, the losses can become considerable if this splicing method is used. For example, a first fibre having an $\omega_{F1}$ equal to 1.8 µm and a second fibre having an $\omega_{F2}$ equal to 4.1 µm, joined together, give rise to an insertion loss (IL) of approximately 45%.

Patent application WO 9522783 describes a fusion coupler formed between two optical fibres, in which a periodic spatial perturbation of the acoustic wave type, whose intensity is such that the coupling ratio can be varied, is passed through the fusion region between the two fibres. The coupler is made in such a way that the coupling ratio is initially zero. For this purpose, if the fibres of the coupler are identical, the coupling ratio varies from 0% to 100%; if the fibres are different, as in the case of fibres having different cross sections, the maximum coupling ratio is less than 100%.

US Patent 4,963,832 describes a coupling device for erbium-doped optical fibre amplifiers. In particular, the coupling device is a dichroic coupler between the doped fibre and the transmission fibre in which the optical signal to be amplified travels. The pump laser of the amplifier is coupled to the end of the doped fibre by means of a lens. The two fibres are different from each other in respect of their mode diameter and the dichroic coupler is made in such a way that the coupling losses are considerably reduced. This coupler is made in such a way that practically all of the power of the optical signal to be amplified is sent to the doped fibre. The residue of the signal from the transmission fibre which is not coupled to the doped fibre can be used to monitor the operation of the system.

The applicant has realized that it is possible to make splices between a first optical fibre and a second optical fibre which is different from the first, by utilizing the method used for making fusion couplers.

The applicant has addressed the problem of enabling the two optical fibres to be coupled, in a fusion coupler, in such a way that all of the optical power of a signal travelling in the said optical fibre is coupled to the said second optical fibre, and vice versa.

The solution proposed by the applicant is that of making a longitudinal splice in which the two different fibres are fused along a plane which is not perpendicular to the optical axis. In particular, in the said longitudinal splice the coupling region can be modified in the radial direction by pre-tapering one of the two fibres in order to improve the coupling between the two fibres, and/or in the axial direction by varying the length of the splicing region between the two fibres.

One aspect of the present invention relates to a method for making a splice between a first optical fibre having a first propagation constant and a second optical fibre having a second propagation constant which is different from the first, characterized in that it comprises the following stages:

- modifying the cross section of the said first fibre along a portion of predetermined length, in such a way that the propagation constant in the said portion differs from the second propagation constant of the said second fibre by less than a first predetermined quantity;
- bringing the two fibres into contact with each other along the said portion of predetermined length;
- fusing the said portion of predetermined length at a fusion temperature which is above a predetermined temperature, and elongating the said portion of predetermined length by a second predetermined quantity in such a way as to produce a coupling of at least 90% between the said first fibre and the said second fibre.

Preferably, the said stage of modifying the cross section of the said first fibre comprises the stage of reducing the diameter of the said fibre.

In particular, the said stage of modifying the cross section of the said first fibre comprises the stage of tapering the said fibre by elongation.

Preferably, the said first predetermined quantity does not exceed $13 \times 10^{-5}$ µm$^{-1}$.

Preferably, the said coupling ratio is greater than 95%.

A further aspect of the present invention relates to a splice between a first optical fibre having a first propagation constant and a second optical fibre having a second propagation constant which is different from the first, characterized in that it comprises a coupling region between an end portion of the said first optical fibre and an end portion of the said second optical fibre such that a coupling of at least 90% in a waveband of at least 100 nm is obtained between the said first fibre and the said second fibre.

Preferably, the cross section of the said first fibre is modified in a portion of predetermined length, in such a way that the said first propagation constant differs from the said second propagation constant of the said second fibre by less than a predetermined quantity corresponding to the said coupling ratio of at least 90%.

Preferably, the said predetermined quantity does not exceed $13 \times 10^{-5}$ µm$^{-1}$.

Further characteristics and advantages of the present invention can be found in greater detail in the following description, with reference to the attached drawings, provided solely for explanatory purposes and without any restrictive intent, which show:

in Figure 1, a graph of the theoretical losses of a splice between two fibres in which the ratio between the mode field radii of the two fibres is shown on the horizontal axis;
in Figure 2, a longitudinal splice made according to the present invention;
in Figure 3a, a section through a first tapered optical fibre and a second optical fibre according to the present invention;
in Figure 3b, a pair of graphs of the refractive indices of the optical fibres of Figure 3a, measured along the lines A-A' and B-B' respectively;
in Figure 4, an apparatus used to make a longitudinal splice according to the present invention.

A longitudinal splice according to one aspect of the present invention is shown in Figure 2, and comprises a first optical fibre $F_1$ and a second optical fibre $F_2$ which is different from the said first optical fibre according to the definition given above.

The said first and second optical fibres are fused together in a coupling region G, whose characteristics are such that the maximum transfer of power of the optical signal takes place between the first optical fibre $F_1$ and the second optical fibre $F_2$.

This splice is made in such a way that an optical signal $i_1$, travelling in the said first optical fibre $F_1$ along the optical axis X and in the direction of the arrows in Figure 2, is coupled in the said coupling region G to the said second fibre $F_2$, in which practically all the optical power of the said optical signal $i_1$ is transferred. Downstream of this coupling region, the said optical signal $i_1$ travels in the said second optical fibre $F_2$.

In the coupling region G, the said first optical fibre $F_1$ and the said second optical fibre $F_2$ are welded together on a plane other than one perpendicular to the optical axis.

In particular, this takes place because, in this coupling region G, a portion of predetermined length of the said first optical fibre is brought into contact with a portion of the said second optical fibre; the area of contact between the two fibres is a line which is not perpendicular to the optical axis. The welding between the two optical fibres is carried out along this line.

The welding between the two optical fibres is carried out along a plane inclined with respect to the optical axis at an angle which is preferably in the range from 2° to 45°.

In a longitudinal splice according to the present invention, the coupling region G can be modified in the radial direction and/or in the longitudinal direction, in order to achieve the maximum transfer of power between the said first fibre and the said second fibre, as follows:

1. in the radial direction, this is done by modifying the cross section of one of the two fibres, for example by tapering the fibre in order to improve the coupling between the two fibres;
2. in the longitudinal direction, this is done, for example, by varying the length of the splice region between the two fibres.

In particular, the method described in 1 above can be used advantageously to cancel the differences in transmissivity characteristics between the two fibres.

For the purposes of the present description, to "taper" a fibre means to bring the said optical fibre to the softening point of glass and to exert a tensile force on it in the direction of the optical axis X. This creates a gradual decrease in the diameter of the fibre.

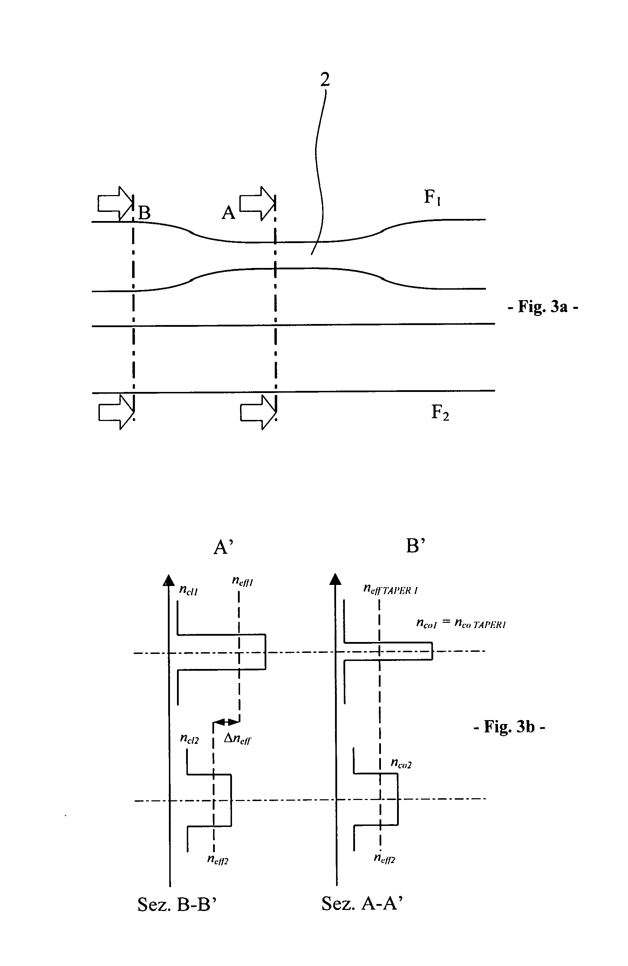

Figure 3a shows the first optical fibre $F_1$ in which the tapering effect due to this softening and traction of the glass is shown in a central area 2.

Tapering an optical fibre causes a change in the propagation constant in the fibre, according to the known relation:

$$\beta = \frac{2 \cdot \pi}{\lambda} \cdot n_{eff} \qquad (2)$$

where $\beta$ is the propagation constant of an optical signal at the wavelength $\lambda$ in the said optical fibre, and $n_{eff}$ is the effective refractive index of the said optical fibre. In particular, this effective refractive index $n_{eff}$ is calculated in a known way from the following formula:

$$n_{eff}^2 = \frac{\int_0^\infty n^2(\rho) \cdot E_x(\rho) \cdot 2\pi\rho \cdot d\rho}{\int_0^\infty E_x(\rho) \cdot 2\pi\rho \cdot d\rho} \qquad (3)$$

in which

$\rho$ is the radial co-ordinate, in other words the distance of a point in the fibre from the centre of the fibre core;

$n(\rho)$ is the profile of the refractive index of the fibre with respect to the radial co-ordinate $\rho$;

$E_x$ is the electrical field in the direction of the optical axis X of the excited mode in the optical fibre in a point having the radial co-ordinate $\rho$.

Modifying the section of a fibre modifies the profile of the refractive index of the fibre and therefore its effective refractive index $n_{eff}$.

From the graphs in Figure 3b in which this effective refractive index is shown with a broken line, the applicant has noted that the refractive index step and the ratio of the core radius to the cladding radius in the tapered part of the fibre remain unchanged from those in the non-tapered part of the optical fibre.

In general, the applicant has noted that, when a fibre is tapered, the difference between the refractive index of the core $n_{co}$ and the refractive index of the cladding $n_{cl}$ remains virtually unchanged, while the radius of the core is reduced in a constant proportion to the radius of the cladding.

The effect which is obtained is that, as the fibre diameter is reduced, the fundamental mode propagated in the fibre moves increasingly into the cladding, in a way dependent on the restriction of the core of the fibre.

As the fibre diameter is reduced, the refractive index $n_{eff}$ also decreases, and at the limit becomes equal to the value of the refractive index of the cladding $n_{cl}$.

In Figures 3a and 3b, the refractive indices of the cladding and the core (indicated as $n_{cl}$ and $n_{co}$ respectively) remain unchanged in the tapered area of the fibre $F_1$; it is the effective refractive index $n_{eff}$ that changes.

Equation (2) shows that the value of the propagation constant $\beta$ decreases with a reduction in the refractive index $n_{eff}$.

In a fusion coupler, the condition of coupling between the two optical fibres which form the coupler depends on the propagation constants in these fibres; if the difference between the two propagation constants does not exceed a specific value, which can be calculated according to the fusion parameters of the coupler, the signals travelling in the two fibres can be coupled together according to a specific coupling ratio. The coupling ratio (CR) varies not only with the propagation constants of the two fibres, but also with the length of the fusion area and the section of the fibres in the area which is elongated during the fusion process.

For the purposes of the present invention, the condition of coupling, or coupling capacity, in a longitudinal splice according to the present invention is achieved when the difference $\Delta$ between two propagation constants of the fibres forming the splice is such as to provide a coupling ratio sufficient to transfer at least 90% of the power of the optical signal travelling in the first optical fibre into the second optical fibre. Preferably, this difference $\Delta$ is such as to provide a coupling ratio sufficient to transfer at least 95% of the power of the optical signal.

In the example of Figure 2, the said first optical fibre $F_1$ has an effective refractive index $n_{eff1}$ which is greater than the refractive index $n_{eff2}$ of the said second optical fibre $F_2$. Therefore, the propagation constant of the said first optical fibre, $\beta_1$, is greater than the propagation constant $\beta_2$ of the said second optical fibre. The said tapering of the first optical fibre $F_1$ can reduce its effective refractive index $n_{eff1}$ until it is essentially equal to the effective refractive index $n_{eff2}$ of the said second optical fibre. Thus, for a signal at a wavelength $\lambda$, the propagation constants $\beta_1$ and $\beta_2$ become essentially equal and the coupling condition is satisfied for this splice between the two optical fibres. The difference between the two propagation constants is sufficiently small to provide a coupling ratio of at least 90% in a waveband of more than 80 nm. Preferably, this waveband is 100 nm. This waveband is preferably centred in the vicinity of the wavelengths of 1300 nm and 1550 nm.

This difference depends on a parameter called the beat length between two optical fibres. In a fusion coupler consisting of two identical optical fibres and having a length of the fusion region equal to half of this beat length, the optical signal travelling in the first fibre is coupled completely into the second fibre of the coupler. This length is dependent on the degree of interpenetration of the cores of the two optical fibres in the fusion region. In the case of fibres which are different from each other, where this beat length is equal to 3 mm, the difference between the propagation constants does not exceed $13 \times 10^{-5}$ [$\mu m^{-1}$].

The condition of applicability of this method for making the effective refractive indices essentially equal is that the effective refractive index $n_{eff2}$ of the said second optical fibre is greater than or equal to the refractive index of the cladding $n_{cl1}$ of the said first optical fibre.

If the characteristics of the two fibres are very different, in other words if the two fibres have effective refractive indices which are very different from each other, it is difficult to obtain a perfect coupling between the propagation constants by means of tapering. In these cases, even obtaining a coupling in which the power transfer is approximately 95% can be satisfactory.

The applicant has conducted an experiment by making a longitudinal splice according to the present invention between the following:

- a standard telecommunications fibre $F_1$ according to ITU-T Recommendation G-652 (the SMF 28 type, made by Corning);
- and a fibre $F_2$ having a negative chromatic dispersion coefficient (the DK-SM type, made by Lycom).

In optical telecommunications systems, these two fibres are joined together when the properties of the Lycom DK-SM fibre are to be used to compensate the chromatic dispersion which is generated in a length of line of the said optical telecommunications system constructed with the said SMF-28 fibre. In the evaluation of the performance of a fibre for chromatic dispersion compensation, one parameter to be taken into consideration is the insertion loss (IL) of the splice between the DK-SM and SMF-28 fibres.

The two fibres have very different values of MFR (5.4 $\mu$m for the SMF-28 and 2.5 $\mu$m for the DK-SM); the theoretical value of insertion loss (IL) of a splice between these two fibres according to formula (1) is approximately 48%.

If an intermediate fibre, having for example an MFR of approximately 4 $\mu$m, is interposed between the two fibres, forming two splices in series, the losses can be reduced to a total power loss of approximately 10%.

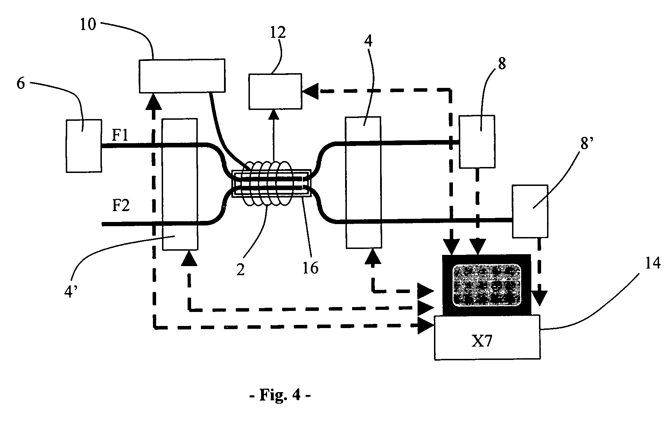

The apparatus used for tapering one of the two fibres to be coupled and also for fusing the coupler is shown schematically in Fig. 4, and comprises a micro-furnace 2 in which the fibres are fused, a pair of motors 4 and 4' for elongating both the fibres $F_1$ and $F_2$, an optical source 6 and two optical signal detectors 8 and 8', located at the ends of the fibres $F_1$ and $F_2$ respectively. The apparatus also comprises a radiofrequency generator 10 for heating the micro-furnace, and a pyrometer 12 for measuring the temperature outside the micro-furnace. The fusion process is controlled by a computer 14.

The fusion is carried out by means of the said micro-furnace which is of the induction-heated platinum type. The length of the micro-furnace is 13 mm.

The fibres are fused inside a quartz tube 16, with an external diameter of 2 mm and an internal diameter of 1 mm, and a length greater than that of the micro-furnace, for example 50 mm. This tube is inserted into the micro-furnace in order to obtain a greater concentration of heat in the central area. At the end of the process, this tube is used as the support for the fixing of the fibres with epoxy resin; the apparatus also measures the optical power in the fibre $F_1$.

For the purposes of the description of the specific experiment described below, it is important to emphasize that $n_{\text{eff (DK-SM)}} > n_{\text{eff (SMF-28)}}$.

In the initial stage, only the DK-SM fibre ($F_1$ in the figure) was inserted and fixed to the motors, after having its coating stripped for a length of 35 mm, to enable the tapering process to be carried out. The SMF-28 fibre ($F_2$ in Figure 4) was then inserted, after having its acrylate coating stripped for a length of 40 mm, and was wound around the fibre $F_1$ to create physical contact between the fibres.

The table below shows the maximum coupling values obtained with the apparatus described above, in which the two fibres (the Lycom DK-SM and the Corning SMF-28) were fused by a conventional process to form couplers with standard fibres, after the standard fibre was pre-elongated (in order to create a pre-taper) with different values of pre-elongation (corresponding, therefore, to different resulting core cross sections).

In particular, the table shows the temperature at which the fusion was carried out for the pre-elongation, the extent of the pre-elongation of the DK-SM fibre in mm, the traction length L of the portion of fused fibres in mm, and the resulting coupling ratio.

| PRE-ELONG. [mm] | 2 | 3 | 4 | 5 | 7 | 9 | 11 |
|---|---|---|---|---|---|---|---|
| TEMP. [°C] | 1460 | 1460 | 1460 | 1460 | 1460 | 1460 | 1460 |
| L [mm] | 15 | 16 | 16.3 | 17.1 | 18.2 | 18 | 17.7 |
| CR [%] | 68 | 84 | 93 | 96 | 94 | 85 | 81 |

The table shows that it is possible to accept a range of pre-elongations (from 4 mm to 7 mm) for which coupling values (CR) of more than 92% can be obtained; this means that the insertion loss (IL) between the two fibres will be less than 8%, and therefore less than the loss occurring when an intermediate fibre is used and a conventional splice is made.

In a specific experiment conducted with the same types of fibre and in the same conditions as those described above, the tapering was carried out by heating the micro-furnace to 1460°C and, after a pre-fusion stage of 30 s at zero velocity, elongating the fibre $F_1$ at the velocity of 50 μm/s. During the process, the optical power at the output of the fibre was monitored constantly to check that there were no power losses (in other words, it was ascertained that the tapering took place in an adiabatic way) . The fusion and elongation process was interrupted after an elongation of approximately 5 mm.

At this point, a new fusion and elongation process was initiated, to produce the coupler; the temperature of the micro-furnace was raised to 1580°C, and then a pre-fusion was carried out at zero velocity for 30 s. The elongation stage was then initiated, with the motors running at a velocity of 48 μm/s. During this stage, the optical power at the outputs of the fibres $F_1$ and $F_2$ was constantly monitored by the photodetectors 8 and 8'. The process was terminated when the detector 8' measured a power of at least 95% of that initially measured by the detector 8.

**Claims**

1. Method for making a splice between a first optical fibre having a first propagation constant and a second optical fibre having a second propagation constant which is different from the first, **characterized in that** it comprises the following stages:

   - modifying the cross section of the said first fibre along a portion of predetermined length, in such a way that the propagation constant in the said portion differs from the second propagation constant of the said second fibre by less than a first predetermined quantity;
   - bringing the two fibres into contact with each other along the said portion of predetermined length;
   - fusing the said portion of predetermined length at a fusion temperature which is above a predetermined temperature, and elongating the said portion of predetermined length by a second predetermined quantity in such a way as to produce a coupling of at least 90% between the said first fibre and the said second fibre.

2. Method according to Claim 1, in which the said stage of modifying the cross section of the said first fibre comprises the stage of reducing the diameter of the said fibre.

3. Method according to Claim 2, in which the said stage of modifying the cross section of the said first fibre comprises the stage of tapering the said fibre by elongation.

4. Method according to Claim 1, in which the said first predetermined quantity does not exceed 13 x $10^{-5}$ μm$^{-1}$

5. Method according to Claim 1, in which the said coupling ratio is greater than 95%.

6. Splice between a first optical fibre having a first propagation constant and a second optical fibre having a second propagation constant which is different from the first, **characterized in that** it comprises a coupling region between an end portion of the said first optical fibre and an end portion of the said second optical fibre, such that a coupling of at least 90% in a waveband of at least 100 nm is obtained between the said first fibre and the said second fibre.

7. Splice according to Claim 6, in which the cross section of the said first fibre is modified in a portion of predetermined length, in such a way that the said first propagation constant differs from the said second propagation constant of the said second fibre by less than a predetermined quantity corresponding to the said coupling ratio of at least 90%.

8. Splice according to Claim 7, in which the said predetermined quantity does not exceed 13 x $10^{-5}$ μm$^{-1}$.

9. Splice obtainable by the method according to Claim 1.

## Giunto tra due fibre

I.L. [ % ] vs $\omega_{F1} / \omega_{F2}$

**Fig. 1**

- Fig. 2 -

$F_1$    G    $F_1$    X

$i_1$    $i_1$

$F_2$    $F_2$

2

⇨ B        A ⇨

$F_1$

- Fig. 3a -

$F_2$

A'                    B'

$n_{cl1}$    $n_{eff1}$        $n_{eff\,TAPER\,1}$

$n_{co1} = n_{co\,TAPER1}$

- Fig. 3b -

$n_{cl2}$    $\Delta n_{eff}$

$n_{co2}$

$n_{eff2}$              $n_{eff2}$

Sez. B-B'                Sez. A-A'

- Fig. 4 -

**European Patent Office**

## EUROPEAN SEARCH REPORT

Application Number

EP 00 12 8290

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 017, no. 290 (P-1549), 3 June 1993 (1993-06-03) & JP 05 019135 A (NIKKO KYODO CO LTD), 29 January 1993 (1993-01-29) * the whole document * | 1-3,6,9 | G02B6/287 G02B6/255 |
| X | US 4 997 248 A (STOWE DAVID W) 5 March 1991 (1991-03-05) * column 5, line 20 - column 10, line 33 * * figures * | 1-3,6,9 | |
| X | EP 0 418 871 A (JAPAN AVIATION ELECTRON ;NIPPON TELEGRAPH & TELEPHONE (JP)) 27 March 1991 (1991-03-27) * the whole document * | 1-3,6,9 | |
| X | US 5 195 151 A (STOWE DAVID W ET AL) 16 March 1993 (1993-03-16) * column 5, line 47 - column 6, line 44 * * column 11, line 6 - column 13, line 38 * * figures 1-8 * | 1-3,6,9 | TECHNICAL FIELDS SEARCHED (Int.Cl.7) G02B |
| A | US 5 171 345 A (TAKEMURA KOJI) 15 December 1992 (1992-12-15) * column 4, line 44 - line 68 * * column 5, line 1 - line 44 * * claims; figures 1-3 * | 1-3,6,9 | |
| A | US 5 295 211 A (WEIDMAN DAVID L) 15 March 1994 (1994-03-15) * claims; figures * | 1,6 | |

The present search report has been drawn up for all claims

| Place of search | Date of completion of the search | Examiner |
|---|---|---|
| THE HAGUE | 24 January 2002 | Mathyssek, K |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03 82 (P04C01)

## ANNEX TO THE EUROPEAN SEARCH REPORT
## ON EUROPEAN PATENT APPLICATION NO.

EP 00 12 8290

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2002

| Patent document cited in search report | | Publication date | Patent family member(s) | | Publication date |
|---|---|---|---|---|---|
| JP 05019135 | A | 29-01-1993 | NONE | | |
| US 4997248 | A | 05-03-1991 | IE | 900302 L | 27-07-1990 |
| | | | WO | 9008968 A1 | 09-08-1990 |
| EP 0418871 | A | 27-03-1991 | JP | 3107107 A | 07-05-1991 |
| | | | CA | 2025765 A1 | 21-03-1991 |
| | | | EP | 0418871 A2 | 27-03-1991 |
| | | | US | 5095516 A | 10-03-1992 |
| US 5195151 | A | 16-03-1993 | WO | 9211552 A1 | 09-07-1992 |
| US 5171345 | A | 15-12-1992 | JP | 2866502 B2 | 08-03-1999 |
| | | | JP | 4366904 A | 18-12-1992 |
| | | | JP | 2930685 B2 | 03-08-1999 |
| | | | JP | 4106506 A | 08-04-1992 |
| | | | JP | 4106507 A | 08-04-1992 |
| US 5295211 | A | 15-03-1994 | AU | 660384 B2 | 22-06-1995 |
| | | | AU | 5277293 A | 14-07-1994 |
| | | | CA | 2109765 A1 | 08-07-1994 |
| | | | CN | 1094818 A ,B | 09-11-1994 |
| | | | DE | 69330596 D1 | 20-09-2001 |
| | | | DE | 69330596 T2 | 29-11-2001 |
| | | | EP | 0607570 A1 | 27-07-1994 |
| | | | JP | 7005338 A | 10-01-1995 |

EPO FORM P0459

For more details about this annex : see Official Journal of the European Patent Office, No. 12/82